# EUROPÄISCHE PATENTSCHRIFT

(11) **EP 3 860 152 B1**
(45) Veröffentlichungstag und Bekanntmachung des Hinweises auf die Patenterteilung: **27.04.2022**
(21) Anmeldenummer: 20155132.2
(22) Anmeldetag: 03.02.2020
(51) Int. Cl.: H04R 25/00, H04R 25/02, H04R 1/10

(54) **ABDECKPLATTE FÜR EIN OHRPASSSTÜCK, OHRPASSSTÜCK UND VERFAHREN ZU DESSEN HERSTELLUNG**
COVER PLATE FOR AN EAR FITTING PIECE, EAR FITTING PIECE AND METHOD FOR PRODUCING THESAME
PLAQUE DE RECOUVREMENT POUR EMBOUT AURICULAIRE, EMBOUT AURICULAIRE ET SON PROCÉDÉ DE FABRICATION

(43) Veröffentlichungstag der Anmeldung: 04.08.2021
(73) Patentinhaber: Sonova AG, 8712 Stäfa (CH)
(72) Erfinder: Ochsenbein, André, 8633 Wolfhausen (CH); Takacs, Michael, 8712 Staefa (CH); Perez, Gabriel, 8708 Männedorf (CH)
(74) Vertreter: Liedtke & Partner Patentanwälte

(56) Entgegenhaltungen:
- EP-A1- 3 588 980
- US-A1- 2006 120 547

## Beschreibung

Die Erfindung betrifft eine Abdeckplatte zum Abdecken einer lateralen Öffnung einer Schale eines Ohrpassstücks, das zum Tragen zumindest teilweise in einem Ohrkanal ausgebildet ist. Ferner betrifft die Erfindung ein Ohrpassstück sowie ein Verfahren zur Herstellung eines Ohrpassstücks.

Ohrpassstücke oder Hörgeräte, die zum Tragen zumindest teilweise in einem Ohrkanal vorgesehen sind, umfassen eine Schale mit einer nach außen weisenden Öffnung, die durch eine Abdeckplatte, die auch als faceplate bezeichnet wird, abgedeckt sind. Im-Ohr-Hörgeräte (ITE - "in the ear") sind Beispiele solcher Hörgeräte, die ein Ohrpassstück aufweisen. Die Schale kann eine standardisierte Form oder eine kundenspezifische Form (das heißt an die individuelle Form des Ohrkanals eines Nutzers angepasst) aufweisen, wobei das Gehäuse oder die Schale eine äußere Öffnung aufweist, die durch eine Abdeckplatte abgedeckt ist, die aus dem Ohrkanal heraus weist, wenn das Im-Ohr-Hörgerät im Ohrkanal getragen wird. Für drahtlose Anwendungen, insbesondere im 2.4 GHz ISM-Band (Industrial, Scientific, and Medical), können Im-Ohr-Hörgeräte mit einer geeigneten Antenne ausgestattet sein. Das Design der Antenne wird durch den verfügbaren, begrenzten Platz, das gewünschte Frequenzband und die Wechselwirkung der elektromagnetischen Strahlung mit dem Gewebe des Nutzers eingeschränkt.

EP 3 588 980 A1 offenbart eine ITE-Hörvorrichtung, die ein Gehäuse umfasst, das eine Schale und eine Frontplatte umfasst; elektronische Komponenten, die in dem Gehäuse angeordnet sind und mindestens ein Mikrofon, eine Signalverarbeitungseinheit, einen Lautsprecher, eine Antenne und eine Batterie umfassen; und eine flexible Hauptplatine zum elektrischen Verbinden von mindestens einem Mikrofon, der Signalverarbeitungseinheit und der Batterie, wobei der Lautsprecher mit der flexiblen Hauptplatine durch Litzendrähte verbunden ist, die an Lautsprecherpads der Leiterplatte gelötet sind und eine Länge von 2 mm bis 15 mm aufweisen.

US 2006/0120547 A1 offenbart ein Hörgerät umfassend eine Frontplatte und eine Schale. Die Frontplatte ist eine runde Platte, die einen in der Oberfläche der Platte definierten Graben und mindestens ein Merkmal aufweist, das der Platte zum Verbinden mit einer Hörgerätekomponente zugeordnet ist. Der Graben ist ein Graben oder Kanal, der in der Oberfläche der Frontplatte definiert ist und eine Wandstruktur zum Koppeln mit einer Hülle eines Hörgeräts enthält. Der Graben kann symmetrisch um das mindestens eine Merkmal definiert sein. Der Graben kann eine ovale Form und einen rechteckigen Querschnitt haben. Auf der Frontplatte befindet sich ein Ausschnitt, mit dem das Herausschneiden von Material aus der Frontplatte beschleunigt werden kann, sobald die Schale mit der Frontplatte verbunden wurde.

Der Erfindung liegt die Aufgabe zu Grunde, eine verbesserte Abdeckplatte für ein Ohrpassstück, das für drahtlose Anwendung geeignet ist, ein Ohrpassstück mit einer solchen Abdeckplatte sowie ein verbessertes Verfahren zur Herstellung eines solchen Ohrpassstücks anzugeben.

Die Aufgabe wird erfindungsgemäß gelöst durch eine Abdeckplatte mit den Merkmalen des Anspruchs 1, durch ein Ohrpassstück mit den Merkmalen des Anspruchs 5 und durch ein Verfahren mit den Merkmalen des Anspruchs 12.

Vorteilhafte Ausgestaltungen der Erfindung sind Gegenstand der Unteransprüche.

Erfindungsgemäß wird eine Abdeckplatte zum Abdecken einer lateralen Öffnung einer Schale eines Ohrpassstücks vorgeschlagen, das zum Tragen zumindest teilweise in einem Ohrkanal ausgebildet ist, wobei die Abdeckplatte auf einer medialen Seite einen umlaufenden Graben zur Aufnahme einer Antenne aufweist, wobei die Abdeckplatte radial außerhalb des Grabens einen umlaufenden Wall und daran anschließend eine Fläche zum Ankleben der Schale aufweist. Unter einem umlaufenden Graben soll in dieser Anmeldung ein Graben verstanden werden, der entweder vollständig umläuft oder eine oder mehrere Unterbrechungen aufweist.

Der Wall verhindert beim Aufkleben der Schale auf der Abdeckplatte, dass Kleber in den Graben läuft. Auf diese Weise wird verhindert, dass die Lage und/oder Form der dort bereits platzierten Antenne verändert wird, so dass die Lage und/oder Form der Antenne bei allen hergestellten Ohrpassstücken reproduzierbar ist.

In einer Ausführungsform grenzt der umlaufende Wall direkt an den Graben an. Der Wall ist insbesondere so platziert, dass er möglichst wenig Platz einnimmt und nicht höher und breiter als nötig ist, jedoch das Herunterfließen des Klebers in den Graben verhindert.

In einer Ausführungsform ist der umlaufende Wall einstückig mit der Abdeckplatte gebildet.

Erfindungsgemäß ragt der Wall 1 mm hoch oder weniger über die Fläche zum Ankleben der Schale.

In einer Ausführungsform ist der Graben in der medialen Oberfläche der Abdeckplatte ausgeformt.

In einer Ausführungsform ist die Abdeckplatte Teil eines Ohrpassstücks, das zum Tragen zumindest teilweise in einem Ohrkanal ausgebildet ist, und ferner eine Schale mit einer lateralen Öffnung umfasst, die durch die Abdeckplatte abgedeckt ist, wobei ein laterales Ende der Schale zumindest auf einer medialen Fläche der Abdeckplatte außerhalb des Walls angeklebt ist.

In einer Ausführungsform umfasst das Ohrpassstück ferner mindestens eine interne Komponente, umfassend eine Sende/Empfänger-Einheit zum drahtlosen Betrieb, insbesondere mit einer Arbeitsfrequenz in einem Band von 2.4 GHz bis 2.5 GHz, sowie eine Antenne, die im Graben angeordnet ist.

In einer Ausführungsform ist der Wall so platziert, dass er direkt an die Schale angrenzt, wenn diese auf die Abdeckplatte aufgeklebt ist. Auf diese Weise wird die Positionierung der Schale auf der Abdeckplatte erleichtert.

In einer Ausführungsform ist am lateralen Ende der Schale eine radial nach innen weisende, umlaufende Ausnehmung vorgesehen, die so ausgebildet ist, dass der Wall zumindest teilweise darin aufgenommen ist und ein verbleibender Teil des lateralen Endes der Schale auf der Abdeckplatte aufgeklebt ist. Diese Ausführungsform löst das Problem, dass insbesondere bei schmalen Ohrkanälen die Schale einen so geringen Außendurchmesser aufweisen muss, dass sie nicht ohne weiteres radial außerhalb des Walls angeklebt werden kann. Die Ausnehmung hilft diesem Problem ab.

In einer Ausführungsform ist die Antenne als eine Dipolantenne ausgebildet.

In einer Ausführungsform ist die Antenne als Leiterbahn auf einer flexiblen Leiterplatte ausgebildet.

In einer Ausführungsform ist die Schale aus Titan, Kunststoff oder einem Elastomer gebildet.

Gemäß einem Aspekt der vorliegenden Erfindung wird ein Verfahren zum Herstellen eines Ohrpassstücks vorgeschlagen, wobei mindestens eine interne Komponente auf einer medialen Seite der Abdeckplatte und eine Antenne im Graben angeordnet wird, wobei ein laterales Ende der Schale zumindest auf einer medialen Fläche der Abdeckplatte außerhalb des Walls angeklebt wird.

In einer Ausführungsform wird anschließend an das Aufkleben der Schale ein überstehender Bereich der Abdeckplatte an einer Außenkante der Schale entlang abgeschnitten.

In einer Ausführungsform wird die Schale mittels 3D-Druck gefertigt und die Ausnehmung wird beim 3D-Druck der Schale ausgebildet wird oder die Ausnehmung wird nachträglich aus der Schale ausgefräst.

Ausführungsbeispiele der Erfindung werden im Folgenden anhand von Zeichnungen näher erläutert.

Darin zeigen:
- Figur 1: eine schematische Schnittansicht eines Details eines Ohrpassstücks mit einer Schale und einer Abdeckplatte,
- Figur 2: eine schematische Schnittansicht der Abdeckplatte,
- Figur 3: eine schematische Schnittansicht der Abdeckplatte mit internen Komponenten des Ohrpassstücks, und
- Figur 4: eine schematische Schnittansicht eines Details einer weiteren Ausführungsform eines Ohrpassstücks mit einer Schale und einer Abdeckplatte.

Einander entsprechende Teile sind in allen Figuren mit den gleichen Bezugszeichen versehen.

Im Folgenden soll der Begriff "Hörgerät" alle Arten von Hörgeräten bezeichnen, die ausgebildet sind, zumindest teilweise in einem Ohrkanal getragen zu werden, beispielsweise Im-Ohr-Hörgeräte (ITE), Im-Kanal-Hörgeräte (ITC - In the canal) oder Komplett-im-Kanal-Hörgeräte (CIC - completely in the canal).

Im Folgenden soll der Begriff "lateral" sich auf eine Richtung beziehen, die vom Trommelfell weg weist, wenn das Hörgerät zumindest teilweise im Ohrkanal getragen wird. Der Begriff "medial" bezieht sich auf eine Richtung zum Trommelfell hin, wenn das Hörgerät zumindest teilweise im Ohrkanal getragen wird.

Die Erfindung betrifft ein Ohrpassstück 1 oder ein Hörgerät, das zum Tragen zumindest teilweise in einem Ohrkanal vorgesehen ist, insbesondere ein Im-Ohr-Hörgerät (ITE), umfassend eine Schale 2, die zum Tragen zumindest teilweise in einem Ohrkanal vorgesehen ist und eine laterale Öffnung aufweist, die durch eine Abdeckplatte 3 (faceplate) abgedeckt sind.

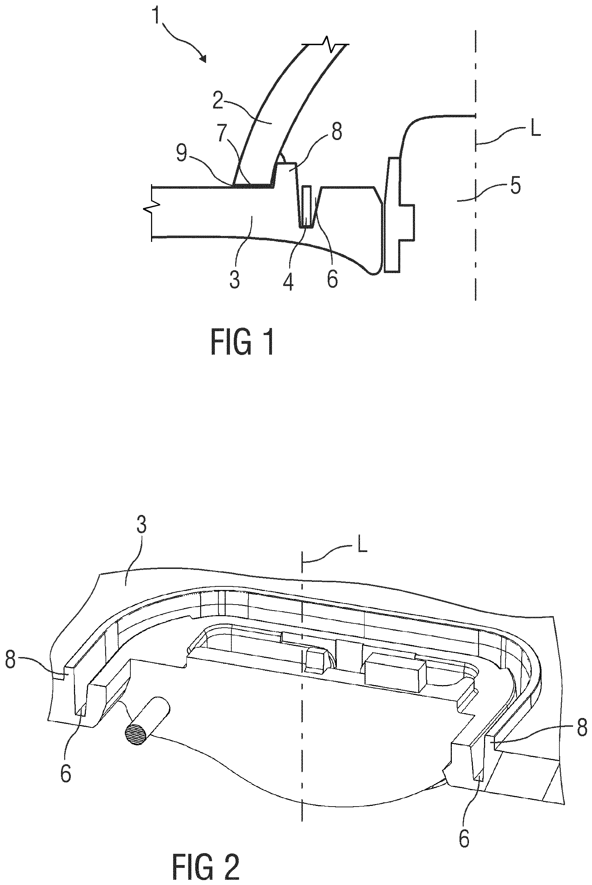

Figur 1 ist eine schematische Ansicht eines Details eines Ohrpassstücks 1 oder Hörgeräts mit einer Schale 2 und einer Abdeckplatte 3.

Das Ohrpassstück 1 oder das Hörgerät kann ferner eine Sende/Empfänger-Einheit zum drahtlosen Betrieb, insbesondere mit einer Arbeitsfrequenz in einem Band von 2.4 GHz bis 2.5 GHz, und eine Antenne 4, insbesondere eine Dipolantenne, umfassen. Die Antenne 4 ist in der Abdeckplatte 3 integriert, insbesondere so, dass sie einer Kontur eines Umfangs der Abdeckplatte 3 folgt, um Strahlungsgewinne zu maximieren.

In einigen Ausführungsformen ist die Antenne 4 um interne Komponenten 5, beispielsweise eine Batterie 10 und eine elektronische Untereinheit 11, des Ohrpassstücks 1 oder Hörgeräts herum angeordnet. Die Antenne 4 kann zwei Arme mit einer Lücke zwischen den Enden der Arme aufweisen, wobei die Lücke vorzugsweise 0,05 mm bis 0,5 mm breit ist, um die Leistung der Antenne 4 zu optimieren.

Die Antenne 4 kann als Leiterbahn auf einer flexiblen Leiterplatte ausgebildet sein, die medial in der Abdeckplatte 3 innerhalb eines Grabens 6 angeordnet ist, der in der medialen Oberfläche der Abdeckplatte 3 umlaufend ausgeformt ist. Die Schale 2 kann beispielsweise aus Titan, Kunststoff oder einem Elastomer gebildet sein und wird mit einem Kleber 7 so auf die mediale Oberfläche der Abdeckplatte 3 geklebt, dass alle internen Komponenten 5 in die Schale 2 passen. Der Graben 6 liegt außerhalb aller internen Komponenten 5 in der Abdeckplatte 3. Auf einer radial von einer Längsachse L des Ohrpassstücks 1 oder Hörgeräts wegweisenden Außenseite des Grabens 6 ist auf der medialen Oberfläche der Abdeckplatte 3, beispielsweise direkt an den Graben 6 angrenzend, ein umlaufender Wall 8 vorgesehen, der beispielsweise einstückig mit der Abdeckplatte 3 gebildet sein kann. Der Wall 8 verhindert beim Aufkleben der Schale 2 auf der Abdeckplatte 3, dass Kleber 7 in den Graben 6 läuft. Auf diese Weise wird verhindert, dass die Lage und/oder Form der dort bereits platzierten Antenne 4 verändert wird, so dass die Lage und/oder Form der Antenne 4 bei allen hergestellten Ohrpassstücken 1 reproduzierbar ist. Der Wall 8 ist insbesondere so platziert, dass er möglichst wenig Platz einnimmt und nicht höher und breiter als nötig ist, jedoch das Herunterfließen des Klebers 7 in den Graben 6 verhindert.

Erfindungsgemäß ist der Wall 8 1 mm hoch oder niedriger. In Versuchen hat sich gezeigt, dass ein Bereich zwischen 0,2 mm und 1 mm besonders vorteilhaft ist. Bei niedrigeren Wällen wird der Klebstoff nicht sicher zurückgehalten. Ein höherer Wall ist nachteilig, weil er mehr Raum beansprucht. Ferner kann der Wall 8 so platziert sein, dass er direkt an die Schale 2 angrenzt, wenn diese auf die Abdeckplatte 3 aufgeklebt ist, so dass die Positionierung der Schale 2 auf der Abdeckplatte 3 erleichtert wird. Anschließend an das Aufkleben der Schale 2 kann ein überstehender Bereich der Abdeckplatte 3 an einer radial von der Längsachse L wegweisenden Außenkante 9 der Schale 2 entlang abgeschnitten werden.

Figur 2 ist eine weitere schematische Ansicht der Abdeckplatte 3.

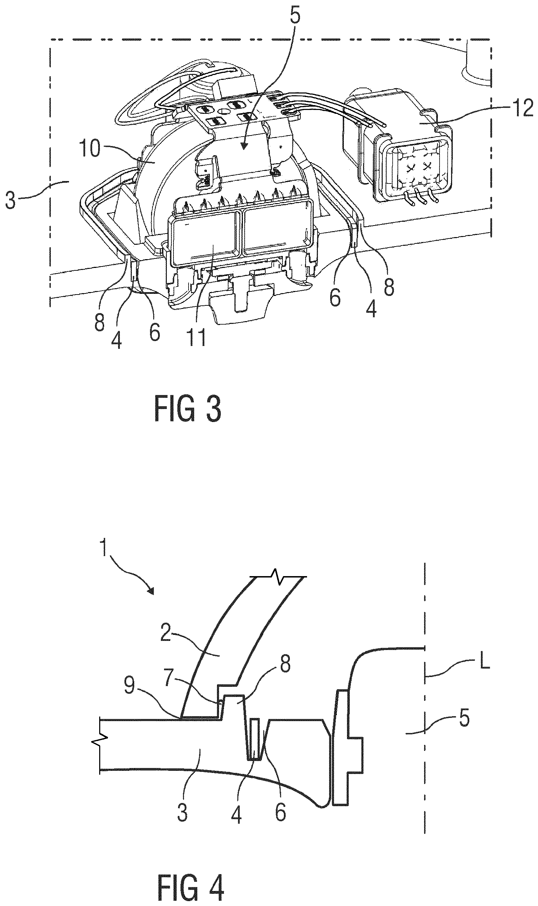

Figur 3 ist eine schematische Ansicht der Abdeckplatte 3 mit daran montierten internen Komponenten 5 des Ohrpassstücks 1, beispielsweise einer Batterie 10 und einer elektronischen Untereinheit 11, beispielsweise umfassend eine Sende/Empfänger-Einheit. Ein Lautsprecher 12 ist an die elektronische Untereinheit 11 angeschlossen und liegt in Figur 3 lose auf dem nach dem späteren Ankleben der Schale 2 abzuschneidenden Bereich um die Abdeckplatte 3 herum auf. Der Lautsprecher 12 wird beispielsweise vor dem Ankleben der Schale 2 in der Schale 2 an deren medialem Ende angeordnet.

Figur 4 ist eine schematische Ansicht eines Details einer weiteren Ausführungsform eines Ohrpassstücks 1 mit einer Schale 2 und einer Abdeckplatte 3.

Das Ohrpassstück 1 oder das Hörgerät kann ferner eine Sende/Empfänger-Einheit zum drahtlosen Betrieb, insbesondere mit einer Arbeitsfrequenz in einem Band von 2.4 GHz bis 2.5 GHz, und eine Antenne 4, insbesondere eine Dipolantenne, umfassen. Die Antenne 4 ist in der Abdeckplatte 3 integriert, insbesondere so, dass sie einer Kontur eines Umfangs der Abdeckplatte 3 folgt, um Strahlungsgewinne zu maximieren.

In einigen Ausführungsformen ist die Antenne 4 um interne Komponenten 5, beispielsweise eine Batterie 10 und eine elektronische Untereinheit 11, des Ohrpassstücks 1 oder Hörgeräts herum angeordnet. Die Antenne 4 kann zwei Arme mit einer Lücke zwischen den Armen aufweisen, wobei die Lücke vorzugsweise 0,1 mm bis 5 mm breit ist, um die Leistung der Antenne 4 zu optimieren.

Die Antenne 4 kann als Leiterbahn auf einer flexiblen Leiterplatte ausgebildet sein, die medial in der Abdeckplatte 3 innerhalb eines Grabens 6 angeordnet ist, der in der medialen Oberfläche der Abdeckplatte 3 ausgeformt ist.

Die Schale 2 kann beispielsweise aus Titan, Kunststoff oder einem Elastomer gebildet sein und wird mit einem Kleber 7 so auf die mediale Seite der Abdeckplatte 3 geklebt, dass alle internen Komponenten 5 in die Schale 2 passen. Der Graben 6 liegt außerhalb aller internen Komponenten 5 in der Abdeckplatte 3. Auf einer radial von einer Längsachse L des Ohrpassstücks 1 oder Hörgeräts wegweisenden Außenseite des Grabens 6 ist auf der medialen Seite der Abdeckplatte 3, beispielsweise direkt an den Graben 6 angrenzend, ein umlaufender Wall 8 vorgesehen, der beispielsweise einstückig mit der Abdeckplatte 3 gebildet sein kann. Der Wall 8 verhindert beim Aufkleben der Schale 2 auf der Abdeckplatte 3, dass Kleber 7 in den Graben 6 läuft. Auf diese Weise wird verhindert, dass die Lage und/oder Form der dort bereits platzierten Antenne 4 verändert wird, so dass die Lage und/oder Form der Antenne 4 bei allen hergestellten Ohrpassstücken 1 reproduzierbar ist. Der Wall 8 ist insbesondere so platziert, dass er möglichst wenig Platz einnimmt und nicht höher und breiter als nötig ist, jedoch das Herunterfließen des Klebers 7 in den Graben 6 verhindert. Erfindungsgemäß ist der Wall 8 1 mm hoch oder niedriger. Ferner kann der Wall 8 so platziert sein, dass er direkt an die Schale 2 angrenzt, wenn diese auf die Abdeckplatte 3 aufgeklebt ist, so dass die Positionierung der Schale 2 auf der Abdeckplatte 3 erleichtert wird. Anschließend an das Aufkleben der Schale 2 kann ein überstehender Bereich der Abdeckplatte 3 an einer radial von der Längsachse L wegweisenden Außenkante 9 der Schale 2 entlang abgeschnitten werden. Insbesondere bei schmalen Ohrkanälen kann es vorkommen, dass die Schale 2 einen so geringen Außendurchmesser aufweisen muss, dass sie nicht ohne weiteres radial außerhalb des Walls 8 angeklebt werden kann. Um dem abzuhelfen, kann in der Schale 2 an deren lateralem Ende eine radial zur Längsachse L hinweisende, umlaufende Ausnehmung 13 vorgesehen sein, die so ausgebildet ist, dass der Wall 8 zumindest zum Teil darin aufgenommen werden und der verbleibende Teil des lateralen Endes der Schale 2 trotzdem auf der Abdeckplatte 3 aufgeklebt werden kann. Die Ausnehmung 13 kann bereits beim 3D-Drucken der Schale 2 ausgebildet werden. Alternativ kann die Ausnehmung 13 nachträglich aus der Schale 2 ausgefräst werden.

### BEZUGSZEICHENLISTE

- 1: Ohrpassstück
- 2: Schale
- 3: Abdeckplatte
- 4: Antenne
- 5: Interne Komponente
- 6: Graben
- 7: Kleber
- 8: Wall
- 9: Außenkante
- 10: Batterie
- 11: Elektronische Untereinheit
- 12: Lautsprecher
- 13: Ausnehmung
- L: Längsachse

## Patentansprüche

1. Abdeckplatte (3) zum Abdecken einer lateralen Öffnung einer Schale (2) eines Ohrpassstücks (1), das zum Tragen zumindest teilweise in einem Ohrkanal ausgebildet ist, wobei die Abdeckplatte (3) auf einer medialen Seite einen umlaufenden Graben (6) zur Aufnahme einer Antenne (4) aufweist, wobei die Abdeckplatte (3) radial außerhalb des Grabens (6) einen umlaufenden Wall (8) und daran anschließend eine Fläche zum Ankleben der Schale (2) aufweist, **dadurch gekennzeichnet, dass** der Wall (8) 1 mm hoch oder weniger über die Fläche zum Ankleben der Schale (2) ragt.

2. Abdeckplatte (3) nach Anspruch 1, wobei der umlaufende Wall (8) direkt an den Graben (6) angrenzt.

3. Abdeckplatte (3) nach Anspruch 1 oder 2, wobei der umlaufende Wall (8) einstückig mit der Abdeckplatte (3) gebildet ist.

4. Abdeckplatte (3) nach einem der vorhergehenden Ansprüche, wobei der Graben (6) in der medialen Oberfläche der Abdeckplatte (3) ausgeformt ist.

5. Ohrpassstück (1), das zum Tragen zumindest teilweise in einem Ohrkanal ausgebildet ist, umfassend eine Abdeckplatte (3) nach einem der vorhergehenden Ansprüche, eine Schale (2) mit einer lateralen Öffnung, die durch die Abdeckplatte (3) abgedeckt ist, wobei ein laterales Ende der Schale (2) zumindest auf einer medialen Fläche der Abdeckplatte (3) außerhalb des Walls (8) angeklebt ist.

6. Ohrpassstück (1) nach Anspruch 5, ferner umfassend mindestens eine interne Komponente (5), umfassend eine Sende/Empfänger-Einheit zum drahtlosen Betrieb, insbesondere mit einer Arbeitsfrequenz in einem Band von 2.4 GHz bis 2.5 GHz, sowie eine Antenne (4), die im Graben (6) angeordnet ist.

7. Ohrpassstück (1) nach einem der Ansprüche 5 oder 6, wobei der Wall (8) so platziert ist, dass er direkt an die Schale (2) angrenzt, wenn diese auf die Abdeckplatte (3) aufgeklebt ist.

8. Ohrpassstück (1) nach einem der Ansprüche 5 bis 7, wobei am lateralen Ende der Schale (2) eine radial nach innen weisende, umlaufende Ausnehmung (13) vorgesehen ist, die so ausgebildet ist, dass der Wall (8) darin zumindest zum Teil aufgenommen ist und ein verbleibender Teil des lateralen Endes der Schale (2) auf der Abdeckplatte (3) aufgeklebt ist.

9. Ohrpassstück (1) nach einem der Ansprüche 6 bis 8, wobei die Antenne (4) als eine Dipolantenne ausgebildet ist.

10. Ohrpassstück (1) nach einem der Ansprüche 6 bis 9, wobei die Antenne (4) als Leiterbahn auf einer flexiblen Leiterplatte ausgebildet ist.

11. Ohrpassstück (1) nach einem der Ansprüche 5 bis 10, wobei die Schale (2) aus Titan, Kunststoff oder einem Elastomer gebildet ist.

12. Verfahren zum Herstellen eines Ohrpassstücks (1) nach einem der Ansprüche 5 bis 11, wobei mindestens eine interne Komponente (5) auf einer medialen Seite der Abdeckplatte (3) und eine Antenne (4) im Graben (6) angeordnet wird, wobei ein laterales Ende der Schale (2) zumindest auf einer medialen Fläche der Abdeckplatte (3) außerhalb des Walls (8) angeklebt wird.

13. Verfahren nach Anspruch 12, wobei anschließend an das Aufkleben der Schale (2) ein überstehender Bereich der Abdeckplatte (3) an einer Außenkante (9) der Schale (2) entlang abgeschnitten wird.

14. Verfahren nach einem der Ansprüche 12 oder 13, wobei die Schale (2) mittels 3D-Druck gefertigt wird und die Ausnehmung (13) beim 3D-Druck der Schale (2) ausgebildet wird oder wobei die Ausnehmung (13) nachträglich aus der Schale (2) ausgefräst wird.

## Claims

1. Cover plate (3) for covering a lateral opening of a shell (2) of an earpiece (1) designed to be worn at least partially within an ear canal, wherein the cover plate (3) has, on a medial side, a circumferential trench (6) for receiving an antenna (4), wherein the cover plate (3) has, radially outside the trench (6), a circumferential wall (8) and, adjoining the latter, a face for gluing the shell (2) on, **characterized in that** the wall (8) protrudes by a height of 1 mm or less above the face for gluing the shell (2) on.

2. Cover plate (3) according to Claim 1, wherein the circumferential wall (8) directly adjoins the trench (6).

3. Cover plate (3) according to Claim 1 or 2, wherein the circumferential wall (8) is formed integrally with the cover plate (3).

4. Cover plate (3) according to one of the preceding claims, wherein the trench (6) is formed in the medial surface of the cover plate (3).

5. Earpiece (1), designed to be worn at least partially within an ear canal, comprising a cover plate (3) according to one of the preceding claims, and a shell (2) with a lateral opening covered by the cover plate (3), wherein a lateral end of the shell (2) is glued at least on a medial face of the cover plate (3) outside the wall (8).

6. Earpiece (1) according to Claim 5, further comprising at least one internal component (5) comprising a transmitter/receiver unit for wireless operation, in particular with an operational frequency in a band from 2.4 GHz to 2.5 GHz, and an antenna (4) arranged in the trench (6).

7. Earpiece (1) according to either of Claims 5 and 6, wherein the wall (8) is positioned such that it directly adjoins the shell (2) when the latter is glued onto the cover plate (3).

8. Earpiece (1) according to one of Claims 5 to 7, wherein a radially inwardly facing, circumferential recess (13) is provided at the lateral end of the shell (2), which recess (13) is designed such that the wall (8) is at least partially received therein and a remaining part of the lateral end of the shell (2) is glued on the cover plate (3).

9. Earpiece (1) according to one of Claims 6 to 8, wherein the antenna (4) is designed as a dipole antenna.

10. Earpiece (1) according to one of Claims 6 to 9, wherein the antenna (4) is designed as a conductive track on a flexible printed circuit board.

11. Earpiece (1) according to one of Claims 5 to 10, wherein the shell (2) is made of titanium, plastic or an elastomer.

12. Method for producing an earpiece (1) according to one of Claims 5 to 11, wherein at least one internal component (5) is arranged on a medial side of the cover plate (3) and an antenna (4) is arranged in the trench (6), wherein a lateral end of the shell (2) is glued at least on a medial face of the cover plate (3) outside the wall (8).

13. Method according to Claim 12, wherein, subsequent to the gluing-on of the shell (2), a projecting region of the cover plate (3) is cut off along an outer edge (9) of the shell (2).

14. Method according to either of Claims 12 and 13, wherein the shell (2) is produced by 3D printing and the recess (13) is formed in the 3D printing of the shell (2), or wherein the recess (13) is milled out subsequently from the shell (2).

## Revendications

1. Plaque de recouvrement (3) destinée à recouvrir une ouverture latérale d'une coque (2) d'un embout auriculaire (1) qui est conçu pour être porté au moins partiellement dans un conduit auditif, la plaque de recouvrement (3) comportant sur un côté médian un sillon circonférentiel (6) destiné à recevoir une antenne (4), la plaque de recouvrement (3) comportant, radialement à l'extérieur du sillon (6), une paroi circonférentielle (8) suivie d'une surface destinée au collage de la coque (2), **caractérisée en ce que** la paroi (8) fait saillie de la surface de collage de la coque (2) sur une hauteur inférieure ou égale à 1 mm.

2. Plaque de recouvrement (3) selon la revendication 1, la paroi circonférentielle (8) étant directement adjacente au sillon (6).

3. Plaque de recouvrement (3) selon la revendication 1 ou 2, la paroi circonférentielle (8) étant formée d'une seule pièce avec la plaque de recouvrement (3).

4. Plaque de recouvrement (3) selon l'une des revendications précédentes, le sillon (6) étant formé dans la surface médiane de la plaque de recouvrement (3).

5. Embout auriculaire (1) destiné à être porté au moins partiellement dans un conduit auditif, ledit embout auriculaire comprenant une plaque de recouvrement (3) selon l'une des revendications précédentes, une coque (2) pourvue d'une ouverture latérale recouverte par la plaque de recouvrement (3), une extrémité latérale de la coque (2) étant collée au moins sur une surface médiane de la plaque de recouvrement (3) à l'extérieur de la paroi (8).

6. Embout auriculaire (1) selon la revendication 5, comprenant en outre au moins un composant interne (5), comprenant un ensemble émetteur/récepteur destiné à fonctionner sans fil, notamment à une fréquence de travail dans une bande allant de 2,4 GHz à 2,5 GHz, et une antenne (4) disposée dans le sillon (6).

7. Embout auriculaire (1) selon l'une des revendications 5 et 6, la paroi (8) étant placée de manière à être directement adjacente à la coque (2) lorsque celle-ci est collée sur la plaque de recouvrement (3).

8. Embout auriculaire (1) selon l'une des revendications 5 à 7, un évidement circonférentiel (13) dirigé radialement vers l'intérieur étant prévu à l'extrémité latérale de la coque (2), lequel évidement circonférentiel est conçu de manière à ce que la paroi (8) soit reçue au moins partiellement à l'intérieur et qu'une partie restante de l'extrémité latérale de la coque (2) soit collée sur la plaque de recouvrement (3).

9. Embout auriculaire (1) selon l'une des revendications 6 à 8, l'antenne (4) étant conçue comme une antenne dipôle.

10. Embout auriculaire (1) selon l'une des revendications 6 à 9, l'antenne (4) étant conçue sous la forme d'une piste conductrice sur une plaquette de circuit imprimé flexible.

11. Embout auriculaire (1) selon l'une des revendications 5 à 10, la coque (2) étant en titane, en matière synthétique ou en élastomère.

12. Procédé de réalisation d'un embout auriculaire (1) selon l'une des revendications 5 à 11, au moins un composant intérieur (5) étant disposé sur un côté médian de la plaque de recouvrement (3) et une antenne (4) étant disposée dans le sillon (6), une extrémité latérale de la coque (2) étant collée au moins sur une surface médiane de la plaque de recouvrement (3) à l'extérieur de la paroi (8).

13. Procédé selon la revendication 12, après collage de la coque (2), une zone saillante de la plaque de recouvrement (3) étant découpée sur un bord extérieur (9) de la coque (2).

14. Procédé selon l'une des revendications 12 et 13, la coque (2) étant fabriquée par impression 3D et l'évidement (13) étant formé lors de l'impression 3D de la coque (2) ou l'évidement (13) étant fraisé ultérieurement dans la coque (2).
